# EUROPEAN PATENT APPLICATION

(11) **EP 2 608 295 A1**
(43) Date of publication of application: **26.06.2013**
(21) Application number: 12182303.3
(22) Date of filing: 30.08.2012
(51) Int. Cl.: H01M 4/58, C01B 25/08, C01B 25/12, H01M 4/136, H01M 4/62, H01M 10/0525, H01M 4/02, H01M 10/052

(54) **Positive active material for rechargeable lithium battery, method of preparing the same, and rechargeable lithium battery including the same**

(30) Priority: 23.12.2011 US 201161579869 P; 13.08.2012 US 201213584692
(71) Applicant: Samsung SDI Co., Ltd., Yongin-si, Gyeonggi-do (KR)
(72) Inventor: Park, Sang-In, Gyeonggi-do (KR); Kim, Ki-Hyun, Gyeonggi-do (KR); Kim, Ji-Hyun, Gyeonggi-do (KR); Song, Jay-Hyok, Gyeonggi-do (KR); You, Yong-Chan, Gyeonggi-do (KR); Lee, Ha-Young, Gyeonggi-do (KR); Park, Han-Eol, Gyeonggi-do (KR)
(74) Representative: Sampson, Eimear

(57) **Abstract**

A positive active material for a rechargeable lithium battery comprises a compound represented by the following Chemical Formula 1 and has a peak at a 2θ value of between 40.0 degrees and 41.0 degrees in an X-ray diffraction (XRD) pattern.

[Chemical Formula 1] LiₓM_{y}Co_{z}PO₄

wherein, in the above Chemical Formula,
0≤x≤2, 0.98≤y≤1, 0<z≤0.02, and M is selected from V, Mn, Fe, Ni, and a combination thereof.

## Description

The present invention relates to a positive active material for a rechargeable lithium battery, a method of preparing the same, a rechargeable lithium battery including the same, and use of the active material in a rechargeable lithium battery.

Batteries generate electric power using an electrochemical reaction material for a positive electrode and a negative electrode. Lithium rechargeable batteries generate electrical energy from changes of chemical potential during the intercalation/deintercalation of lithium ions at the positive and negative electrodes.

Lithium rechargeable batteries use materials that reversibly intercalate or deintercalate lithium ions during charge and discharge reactions for both positive and negative active materials and contain an organic electrolyte or a polymer electrolyte between the positive electrode and the negative electrode.

For negative active materials of rechargeable lithium batteries, various carbon-based materials such as artificial graphite, natural graphite, and hard carbon, which can all intercalate and deintercalate lithium ions, have been used.

For positive active materials of rechargeable lithium batteries, lithium-transition element composite oxides being capable of intercalating lithium such as LiCoO₂, LiMn₂O₄, LiNiO₂, LiNi₁₋ₓCoₓO₂ (o<x<1), LiMnO₂, LiFePO₄, and the like have been researched.

According to a first aspect of the present invention, provided is a positive active material for a rechargeable lithium battery, comprising a compound which is represented by the following Chemical Formula 1 and has a peak at a 2θ value of between 40.0 degrees and 41.0 degrees in an X-ray diffraction (XRD) pattern.

[Chemical Formula 1] LiₓM_{y}Co_{z}PO₄

wherein, in the above Chemical Formula,
0≤5≤2, 0.98≤y≤1, 0<z≤0.02, and M is selected from V, Mn, Fe, Ni, and a combination thereof. The X-ray diffraction pattern is measured using a CuKα-ray.

The compound of chemical formula 1 may have an XRD peak with an intensity ratio ranging from 20:1 to 8:1 at (002) and (020) planes of the XRD pattern.

The positive active material for a rechargeable lithium battery may have a particle size ranging from 100 nm to 800 nm.

The positive active material for a rechargeable lithium battery may further include a carbon coating layer on at least part of the surface of the compound of chemical formula 1.

The carbon coating layer may include carbon selected from the group consisting of carbon nanotubes, carbon nanolobes, carbon nanowires, denka black, ketjen black, and a combination thereof.

The positive active material for a rechargeable lithium battery may have electrical conductivity ranging from 10⁻⁴² to 10⁻¹ S/m. The positive active material may have an ion conductivity ranging from 10⁻¹⁰ to 10⁻¹ S/m. The positive active material according to the present invention may improve charge and discharge capacity and high-rate characteristics of a rechargeable lithium battery.

According to a second aspect of the present invention, provided is a method of preparing a positive active material for a rechargeable lithium battery, the method comprising mixing a Li raw material, an M raw material, a PO₄ raw material, and a Co raw material and firing the mixture at a temperature ranging from 6₅₀ to 850°C. The positive active material is represented by the following chemical formula 1.

[Chemical Formula 1] LiₓM_{y}Co_{z}PO₄

wherein, in the above Chemical Formula,
0≤X≤2, 0.98≤y≤1, 0<z≤0.02, and M is selected from V, Mn, Fe, Ni, and a combination thereof.

The mixture may be fired for 8 to 12 hours.

The firing may be performed at a speed of about 2°C/min up to the firing temperature.

The firing may be performed at a temperature ranging from 650 to 850°C for about 10 hours.

After the firing, a cooling process may be performed. The cooling may be performed at a speed of about 2 °C/min.

A carbon raw material may be added to the mixture before firing, as well as the Li raw material, the M raw material, the PO₄ raw material, and the Co raw material.

The carbon raw material may be selected from the group consisting of sucrose, glycol, glycerine, kerosene, and a combination thereof.

According to a third aspect of the present invention, provided is a rechargeable lithium battery that includes a positive electrode including the positive active material according to the invention in its first aspect; a negative electrode including a negative active material; and a non-aqueous electrolyte.

According to a fourth aspect of the present invention there is provided use of an active material according to the invention in its first aspect in a rechargeable lithium battery.

The positive active material may have improved electrical conductivity and ion conductivity as well as stability and economical characteristics of an olivine structure and thus, realizes a rechargeable lithium battery with excellent cycle-life characteristic, initial charge and discharge capacity and high-rate characteristics.

A more complete appreciation of the present invention, and many of the attendant advantages thereof, will be readily apparent as the same becomes better understood by reference to the following detailed description when considered in conjunction with the accompanying drawings, wherein:
FIG. 1 is a schematic view of a rechargeable lithium battery according to an embodiment of the present invention;
FIG. 2 is a graph showing the XRD data of a positive active material for a rechargeable lithium battery according to an embodiment of the present invention;
FIG. 3 is a graph showing the XRD data of a positive active material for a rechargeable lithium battery according to an embodiment of the present invention;.
FIG. 4 is a graph showing the XRD data of a positive active material for a rechargeable lithium battery according to Comparative Example 1;
FIG. 5 shows XRD data of each a, b, and c axis direction extracted from the XRD data of FIGS. 2 to 4; and
FIG. 6 shows charge and discharge data of rechargeable lithium batteries according to embodiments of the present invention and according to Comparative Example 1.

In an aspect of the present invention, a positive active material for a rechargeable lithium battery comprises a compound represented by the following Chemical Formula 1, having a peak at a 2θ value of 40.0 degrees to 41.0 degrees in an X-ray diffraction (XRD) pattern.

[Chemical Formula 1] LiₓM_{y}Co_{z}PO₄

wherein, in the above Chemical Formula,
0≤5X≤2, 0.98≤y≤1, 0<z≤0.02, and M is selected from V, Mn, Fe, Ni, or a combination thereof.

The positive active material represented by the above Chemical Formula 1 has an olivine structure, in which the transition element(s), M, may be partly substituted with Co. The positive active material represented by the above Chemical Formula 1 is prepared through one-step heat-treatment and has an olivine structure with a different degree of crystallinity and surface state from olivine structures prepared through multistep heat-treatments. Thus, the positive active material improves electrical conductivity and ion conductivity and, as a result, the initial capacity of a rechargeable battery in which it is included. At the same time, the positive active material still maintains an olivine structure and thus, has economical and stable high voltage characteristics due to the olivine structure. A method including the one-step heat treatment for preparing the positive active material will also be described.

The positive active material for a rechargeable lithium battery has a peak at a 2θ value of about 40.0 degrees to about 41.0 degrees in an X-ray diffraction (XRD) pattern measured using CuKα ray due to crystal degree and surface state changes of its olivine structure.

In addition, the positive active material for a rechargeable lithium battery may have a XRD peak with an intensity ratio ranging from about 20:1 to about 8:1 at (002) and (020) planes of the XRD pattern.

The positive active material for a rechargeable lithium battery may have a particle size ranging from about 100 nm to about 800 nm. The positive active material with a particle size within this range may have improved electric conductivity.

In the above Chemical Formula 1, the doping amount of cobalt is determined depending on z, for example, 0.01≤z≤0.02. When cobalt is doped within this range, the positive active material may have improved electric conductivity and ion conductivity.

The positive active material for a rechargeable lithium battery may further include a carbon coating layer on the surface or on at least part of the surface thereof. The positive active material for a rechargeable lithium battery including the carbon coating layer may have improved electrical conductivity, thereby having excellent electrochemical characteristics.

The carbon coating layer may have a thickness ranging from about 5nm to about 100nm. When the carbon coating layer has a thickness within this range, it may effectively improve electric conductivity of the positive active material.

The carbon coating layer may include, for example, carbon nanotubes, carbon nanorods, carbon nanowires, denka black, ketjen black, or a combination thereof.

The positive active material for a rechargeable lithium battery may have, for example, electrical conductivity ranging from about 10⁻⁴² to about 10⁻¹ S/m. The positive active material for a rechargeable lithium battery may have, for example, ion conductivity ranging from about 10⁻¹⁰ to about 10⁻¹ S/m. A rechargeable lithium battery including a positive active material with electrical conductivity or ion conductivity within these ranges may have excellent initial charge and discharge capacity and high-rate characteristics.

Hereinafter, a method of preparing the positive active material for a rechargeable lithium battery will be described in detail.

The positive active material for a rechargeable lithium battery is prepared by mixing a Li raw material, an M raw material, a PO₄ raw material, and a Co raw material and heat-treating the mixture at a temperature ranging from 6₅₀ to 850°C.

The Li raw material may include lithium phosphate (Li₃PO₄), lithium nitrate(LiNO₃), lithium acetate (LiCOOCH₃), lithium carbonate (Li₂CO₃), lithium hydroxide (LiOH), lithium dihydrogen phosphate (LiH₂PO₄), or a combination thereof, but is not limited thereto.

The M raw material may include metal sulfates, metal nitates, metal acetates, metal hydroxides, metal chlorides, metal oxalates, metal fluorides, metal carbonates, or a combination thereof, (where the metal is selected from V, Mn, Fe, Ni, and a combination thereof), but is not limited thereto.

The PO₄ raw material may include phosphoric acid (H₃PO₄), ammonium phosphate dibasic ((NH₄)₂HPO₄), ammonium phosphate trihydrate ((NH₄)₃PO_{4.3}H₂O), metaphosphoric acid, orthophosphoric acid, ammonium dihydrogen phosphate (NH₄H₂PO₄), or a combination thereof but is not limited thereto.

The heat-treatment in the firing may be performed as one step rather than multi-steps as described above.

For example, the firing may be performed at a speed of about 2°C/min.

The firing may be performed for 8 to 12 hours, for example the firing may be performed at a temperature ranging from about 650 to about 850°C for about 10 hours.

In addition, after the firing process, a cooling process may be performed. The cooling process may be performed at a speed of about 2°C/min.

The compound of formula 1 is a compound with an olivine structure. The olivine structure may have appropriate crystal degree and surface state to achieve appropriate electrical conductivity and ion conductivity for the positive active material.

A carbon raw material may be added to the mixture before filing, alongside the Li raw material, the M raw material, the PO₄ raw material, and the Co raw material to further form a carbon coating layer on the surface.

The carbon raw material may be selected from the group consisting of sucrose, glycol, glycerine, kerosene, and a combination thereof.

In another aspect of the present invention, a rechargeable lithium battery including a positive electrode including the positive active material; a negative electrode including a negative active material; and a non-aqueous electrolyte is provided.

A rechargeable lithium battery may be classified as a lithium ion battery, a lithium ion polymer battery, and a lithium polymer battery depending on the presence of a separator and the kind of an electrolyte used therein. The rechargeable lithium battery may have a variety of shapes and sizes, including for example a cylindrical, prismatic, coin, or pouch-type battery and a thin film type or a bulky type in size. The structure and methods of fabrication for a lithium ion battery pertaining to the present invention are well known in the art.

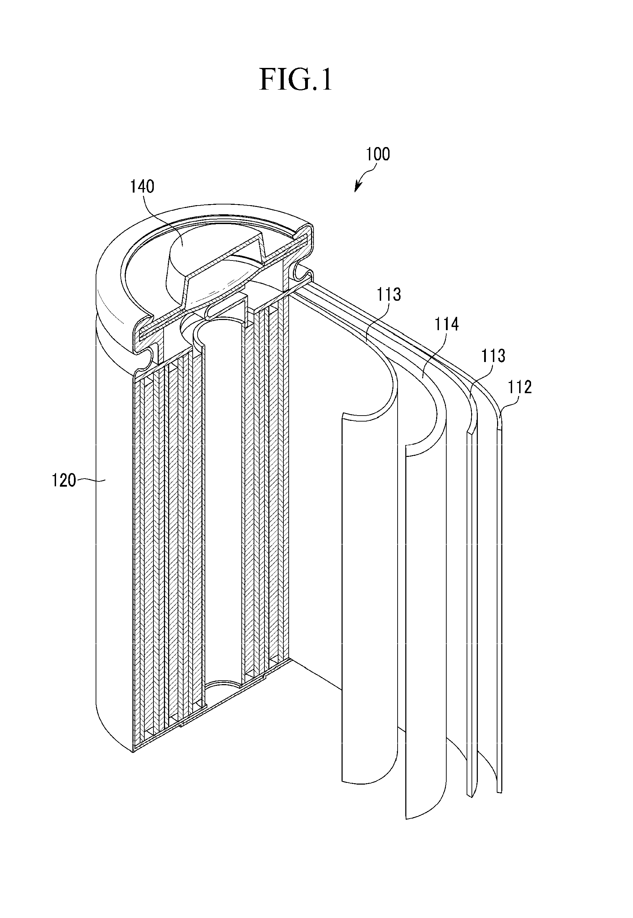

FIG. 1 is an exploded perspective view showing the schematic structure of a rechargeable lithium battery. Referring to FIG. 1, the rechargeable lithium battery 100 includes a negative electrode 112, a positive electrode 114, a separator 113 interposed between the negative electrode 112 and the positive electrode 114, an electrolyte (not shown) impregnating the negative electrode 112, positive electrode 114, and separator 113, a battery case 120, and a sealing member 140 sealing the battery case 120. The rechargeable lithium battery 100 is fabricated by sequentially laminating a negative electrode 112, a positive electrode 114, and a separator 113, spirally winding them, and housing the spiral-wound product in a battery case 120.

The negative electrode includes a current collector and a negative active material layer disposed on the current collector. The negative active material layer may include a negative active material.

The negative active material includes a material that reversibly intercalates/deintercalates lithium ions, a lithium metal, a lithium metal alloy, a material capable of doping and dedoping lithium, or a transition metal oxide.

The material that can reversibly intercalate/deintercalate lithium ions may be/include a carbon material. The carbon material may be any carbon-based negative active material generally used for lithium ion rechargeable batteries. Examples of the carbon materials include crystalline carbon, amorphous carbon, and mixtures thereof. The crystalline carbon may be non-shaped, or sheet, flake, spherical, or fiber-shaped natural graphite or artificial graphite. The amorphous carbon may be a soft carbon (carbon fired at low temperature), a hard carbon, a mesophase pitch carbonized product, fired coke, and the like.

Examples of the lithium metal alloy include lithium and a metal of Na, K, Rb, Cs, Fr, Be, Mg, Ca, Sr, Si, Sb, Pb, In, Zn, Ba, Ra, Ge, Al, or Sn.

Examples of the material capable of doping lithium include Si, SiOₓ (o < x < 2), a Si-C composite, a Si-Q alloy (wherein Q is an alkali metal, an alkaline-earth metal, group 13 to 16 elements, a transition element, a rare earth element, or a combination thereof, but not Si), Sn, SnO₂, a Sn-C composite, a Sn-R alloy (wherein R is an alkali metal, an alkaline-earth metal, a group 13 to group 16 element, a transition element, a rare earth element, or a combination thereof, but not Sn), and the like. The Q and R may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

Examples of the transition metal oxide include vanadium oxide, lithium vanadium oxide, and the like.

The negative active material layer may include a binder and optionally, a conductive material.

The binder improves binding properties of negative active material particles with one another and with a current collector. Examples of the binder include at least one selected from polyvinylalcohol, carboxymethylcellulose, hydroxypropylcellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but is not limited thereto.

The conductive material improves electrical conductivity of a negative electrode. Any electrically conductive material can be used as a conductive agent, unless it causes a chemical change. Examples of the conductive material include at least one selected from a carbon-based material such as natural graphite, artificial graphite, carbon black, acetylene black, ketjen black, carbon fiber, and the like; a metal-based material of a metal powder or a metal fiber including copper, nickel, aluminium, silver or the like; a conductive polymer such as a polyphenylene derivative, and the like; or a mixture thereof.

Examples of the current collector include a copper foil, a nickel foil, a stainless steel foil, a titanium foil, a nickel foam, a copper foam, a polymer substrate coated with a conductive metal, or combinations thereof.

The positive electrode may include a current collector and a positive active material layer formed on the current collector.

According to the present invention, the positive active material is the same as described above.

The positive active material layer includes a binder and a conductive material.

The binder improves binding properties of the positive active material particles to one another and to a current collector. Examples of the binder may include polyvinylalcohol, carboxymethylcellulose, hydroxypropylcellulose, diacetylcellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material improves electrical conductivity of a negative electrode. Any electrically conductive material can be used as a conductive agent unless it causes a chemical change. Examples of the conductive material include at least one selected from natural graphite, artificial graphite, carbon black, acetylene black, ketjen black, a carbon fiber, metal powder, a metal fiber of copper, nickel, aluminium, silver, and the like, a polyphenylene derivative, and mixtures thereof.

The current collector may be Al but is not limited thereto.

The negative and positive electrodes may be fabricated in a method of preparing an active material composition by mixing the active material, a conductive material, and a binder and coating the composition on a current collector. The electrode manufacturing method is well known and thus, is not described in detail in the present specification.

The electrolyte may include a non-aqueous organic solvent and a lithium salt.

The non-aqueous organic solvent plays a role of transmitting ions taking part in the electrochemical reaction of a battery.

Non-aqueous organic solvents include, for example, a carbonate-based, ester-based, ether-based, ketone-based, alcohol-based, or aprotic solvent but the choice of solvent is not limited thereto. The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethylacetate, methylpropionate, ethylpropionate, γ-butyrolactone, decanolide, valerolactone, mevalonolactone, caprolactone, and the like. The ether-based solvent may include dibutyl ether, tetraglyme, diglyme, dimethoxyethane, 2-methyltetrahydrofuran, tetrahydrofuran and the like. The ketone-based solvent may include cyclohexanone, and the like. The alcohol-based solvent may include ethanol, isopropylalcohol, and the like. The aprotic solvent may include nitriles such as R-CN(wherein R is a C₂ to C20 linear, branched, or cyclic hydrocarbon group, and may include a double bond, an aromatic ring, or an ether bond), amides such as dimethylformamide, dimethylacetamide, dioxolanes such as 1,3-dioxolane, sulfolanes, and the like.

The non-aqueous organic solvent may be used singularly or in a mixture. When the organic solvent is used in a mixture, its mixture ratio can be controlled in accordance with the desired performance of the battery.

The carbonate-based solvent may include a mixture of a cyclic carbonate and a linear carbonate. When the cyclic carbonate and the linear carbonate are mixed together in a volume ratio of about 1 : 1 to about 1 : 9 as an electrolyte, the electrolyte may have enhanced performance.

The electrolyte may be prepared by further adding an aromatic hydrocarbon-based solvent to a carbonate-based solvent. The carbonate-based solvent and the aromatic hydrocarbon-based solvent may be mixed together in a volume ratio of about 1 : 1 to about 30 : 1.

The aromatic hydrocarbon-based organic solvent may be an aromatic hydrocarbon-based compound represented by the following Chemical Formula 2.

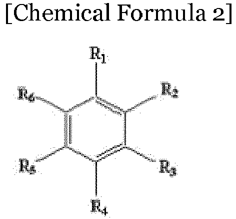

In Chemical Formula 2, R₁ to R₆ are each independently hydrogen, halogen, a C₁ to C10 alkyl group, a C₁ to C10 haloalkyl group, or a combination thereof.

Examples of the aromatic hydrocarbon-based organic solvent include benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 1,2-difluorotoluene, 1,3-difluorotoluene, 1,4-difluorotoluene, 1,2,3-trifluorotoluene, 1,2,4-trifluorotoluene, chlorotoluene, 1,2-dichlorotoluene, 1,3-dichlorotoluene, 1,4-dichlorotoluene, 1,2,3-trichlorotoluene, 1,2,4-trichlorotoluene, iodotoluene, 1,2-diiodotoluene, 1,3-diiodotoluene, 1,4-diiodotoluene, 1,2,3-triiodotoluene, 1,2,4-triiodotoluene, xylene, or a combination thereof.

The non-aqueous electrolyte may further include vinylene carbonate or an ethylene carbonate-based compound represented by the following Chemical Formula 3 in order to improve cycle-life of a battery.

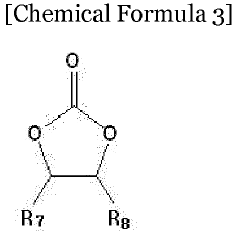

In Chemical Formula 3, R₇ and R₈ are each independently hydrogen, a halogen, a cyano group (CN), a nitro group (NO₂) or a C₁ to C₅ fluoroalkyl group, provided that at least one of R₇ and R₈ is a halogen, a cyano group (CN), a nitro group (NO₂) or a C₁ to C₅ fluoroalkyl group.

Examples of the ethylene carbonate-based compound include difluoro ethylenecarbonate, chloroethylene carbonate, dichloroethylene carbonate, bromoethylene carbonate, dibromoethylene carbonate, nitroethylene carbonate, cyanoethylene carbonate, fluoroethylene carbonate, and the like. The use amount of the vinylene carbonate or the ethylene carbonate-based compound for improving cycle life may be adjusted within an appropriate range.

The lithium salt is dissolved in the non-aqueous solvent and supplies lithium ions in a rechargeable lithium battery, and basically operates the rechargeable lithium battery and improves lithium ion transfer between positive and negative electrodes. Examples of the lithium salt include LiPF₆, LiBF₄, LiSbF₆, LiAsF₆, LiC₄F₉SO₃, LiClO₄, LiAlO₂, LiAlCl₄, LiN(CₓF₂ₓ₊₁SO₂)(C_{y}F_{2y+1}SO₂) (wherein, x and y are natural numbers), LiCl, LiI, LiB(C₂O₄)₂ (lithium bis(oxalato) borate, LiBOB); or a combination thereof, in which an additional lithium salt is used as a supporting electrolytic salt. The lithium salt may be used in a concentration of 0.1 to 2.0M. When the lithium salt is included within the above concentration range, it may improve electrolyte performance and lithium ion mobility due to optimal electrolyte conductivity and viscosity.

The rechargeable lithium battery may further include a separator between the negative electrode and the positive electrode. Examples of the separator include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

The following examples illustrate the present invention in more detail. These examples, however, should not in any sense be interpreted as limiting the scope of the present invention.

### Example

### Example 1: Preparation of Positive Active Material

Lithium carbonate as a Li raw material, iron oxalate as a Fe raw material, diammonium phosphate as a PO₄ raw material, and cobalt nitrate as a Co material were processed in a ball mill. The Co raw material and the Fe raw material were mixed in a mole ratio of 0.99:0.01 between Fe and Co atoms included in the raw materials.

The ball mill process was performed for approximately 48 hours by using organic alcohol.

After the ball mill process, the simply-mixed raw materials were heated at about 100°C under a nitrogen atmosphere or air atmosphere to evaporate the remaining organic alcohol.

After the drying, approximately 5wt% of sucrose was added to the reactant to coat carbon on the surface thereof.

Then, the reactant was heat-treated at about 700°C for about 10 hours under a reducing atmosphere, obtaining a positive active material having an average diameter of 200 nm and represented by LiFe₀₋₉₉C₀₋₀₁PO₄.

### Example 2: Preparation of Positive Active Material

Lithium carbonate as a Li raw material, iron oxalate as a Fe raw material, diammonium phosphate as a PO₄ raw material, and cobalt nitrate as a Co material were processed in a ball mill. The Co raw material and the Fe raw material were mixed in a mole ratio of 0.99:0.01 between Fe and Co atoms therein.

The ball mill process was performed for approximately 48 hours by using organic alcohol.

After the ball mill process, the simply-mixed raw materials were dried at about 100°C under a nitrogen atmosphere or air atmosphere to evaporate the remaining organic alcohol.

After the drying process, approximately5wt% of sucrose was added to the reactant to coat carbon on the surface thereof.

Then, the reactant was heat-treated at about 800°C for about 10 hours under a reducing atmosphere, obtaining a positive active material having an average diameter of 400 nm and represented by LiFe_{0.99}C_{0.01}PO₄.

### Example: Preparation of Positive Active Material

Lithium carbonate as a Li raw material, vanadium Oxide as a V raw material, diammonium phosphate as a PO₄ raw material, and cobalt nitrate as a Co material were processed in a ball mill. The Co raw material and the Fe raw material were mixed in a mole ratio of 0.99:0.01 between V and Co atoms included in the raw materials.

The ball mill process was performed for approximately48 hours by using organic alcohol.

After the ball mill process, the simply-mixed raw materials were heated at about 100°C under a nitrogen atmosphere or air atmosphere to evaporate the remaining organic alcohol.

After the drying, approximately 5wt% of sucrose was added to the reactant to coat carbon on the surface thereof.

Then, the reactant was heat-treated at about 700°C for about 10 hours under a reducing atmosphere, obtaining a positive active material having an average diameter of 200 nm and represented by LiV_{0.99}Co_{0.01}PO₄.

### Example 4: Preparation of Positive Active Material

Lithium carbonate as a Li raw material, manganese oxalate as a Mn raw material, diammonium phosphate as a PO₄ raw material, and cobalt nitrate as a Co material were processed in a ball mill. The Co raw material and the Fe raw material were mixed in a mole ratio of 0.99:0.01 between Mn and Co atoms included in the raw materials.

The ball mill process was performed for approximately48 hours by using organic alcohol.

After the ball mill process, the simply-mixed raw materials were heated at about 100°C under a nitrogen atmosphere or air atmosphere to evaporate the remaining organic alcohol.

After the drying, approximately5wt% of sucrose was added to the reactant to coat carbon on the surface thereof.

Then, the reactant was heat-treated at about 700°C for about 10 hours under a reducing atmosphere, obtaining a positive active material having an average diameter of 200 nm and represented by LiMn_{0.99}C_{0.01}PO₄.

### Example 5: Preparation of Positive Active Material

Lithium carbonate as a Li raw material, Nickel oxide as a Ni raw material, diammonium phosphate as a PO₄ raw material, and cobalt nitrate as a Co material were processed in a ball mill. The Co raw material and the Fe raw material were mixed in a mole ratio of 0.99:0.01 between Ni and Co atoms included in the raw materials.

The ball mill process was performed for approximately48 hours by using organic alcohol.

After the ball mill process, the simply-mixed raw materials were heated at about 100°C under a nitrogen atmosphere or air atmosphere to evaporate the remaining organic alcohol.

After the drying, approximately 5wt% of sucrose was added to the reactant to coat carbon on the surface thereof.

Then, the reactant was heat-treated at about 700°C for about 10 hours under a reduction atmosphere, obtaining a positive active material having an average diameter of 200n m and represented by LiNi_{0.99}C_{0.01}PO₄.

### Comparative Example 1: Preparation of Positive Active Material

Lithium carbonate as a Li raw material, iron oxalate as a Fe raw material, diammonium phosphate as a PO₄ raw material, and cobalt nitrate as a Co material were processed in a ball mill. The Co raw material and the Fe raw material were mixed in a mole ratio of 0.99:0.01 between Fe and Co atoms.

The ball mill process was performed for approximately48 hours by using organic alcohol.

After the ball mill process, the simply-mixed raw materials were dried at about 100°C under a nitrogen atmosphere or air atmosphere to evaporate organic alcohol.

Then, the reactant was heat-treated at about 350°C for about 5 hours under an air atmosphere to evaporate impurities.

After the drying process, approximately 5wt% of sucrose was added to the reactant to coat carbon on the surface thereof.

Then, the reactant was heat-treated at about 700°C for about 10 hours under a reduction atmosphere, obtaining a positive active material having an average diameter of 250 nm and represented by LiFe_{0.99}CO_{0.01}PO₄.

### Example 6: Fabrication of coin cell

### (Fabrication of Positive electrode)

The positive active material according to Example 1, polyvinylidene fluoride as a binder, and carbon black as a conductive material were mixed in a weight ratio of 90:5:5 in an N-methylpyrrolidone solvent, preparing a positive active material layer slurry. The positive active material layer slurry was thinly coated on an Al foil as a positive electrode current collector and then, dried at 120°C for 1 hour and pressed, fabricating a positive electrode including a positive active material layer.

### (Fabrication of Negative electrodes)

A Li foil as a negative active material was used to fabricate a negative electrode.

### (Fabrication of Battery cells)

The positive electrode, the negative electrode, a 20µm-thick separator made of a polyethylene material, and an electrolyte solution prepared by mixing EC (ethylene carbonate), EMC (ethylmethyl carbonate), and DMC (dimethyl carbonate) in a volume ratio of 3:3:4 and adding 1.15M LiPF₆ thereto were assembled to fabricate a coin cell.

### Example 7: Fabrication of Coin cell

A coin cell was fabricated according to the same method as Example 6 by using the positive active material of Example 2.

### Comparative Example 2: Fabrication of Coin cell

A coin cell was fabricated according to the same method as Example 6 except for using the positive active material according to Comparative Example 1 instead of the one according to Example 1.

### Experimental Examples

### XRD analysis

Instrumentation used: X-pert (Philips)
XRD experimental condition:
step size: 0.02theta
step time: 0.05 seconds
start angle: 10 degrees
end angle: 80 degrees
scan speed: 0.04 µm/s

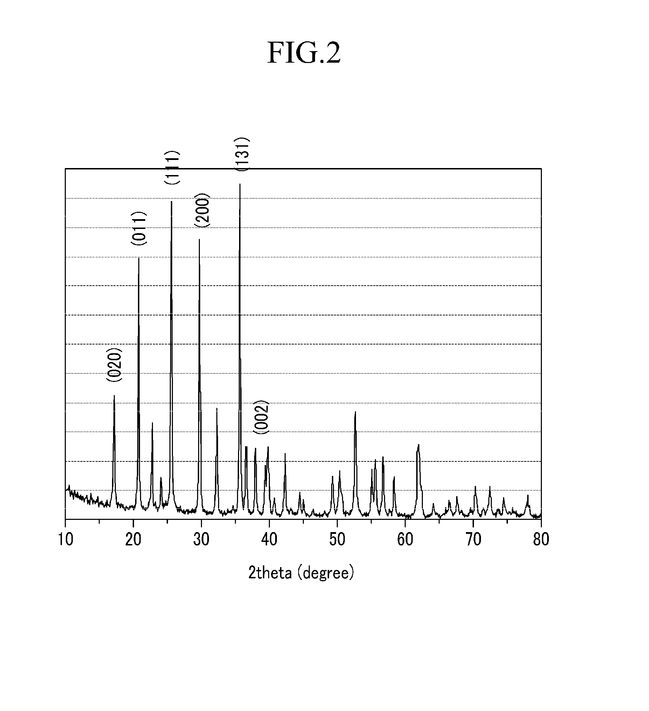

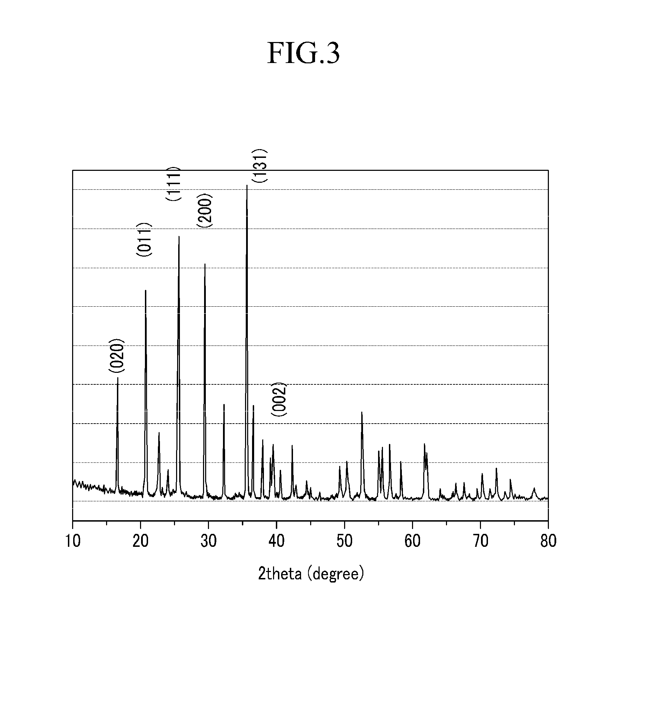

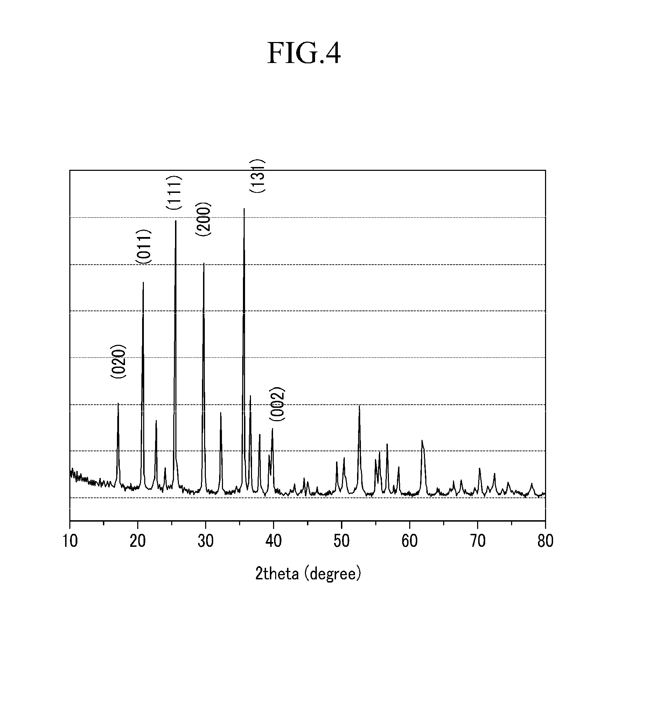

FIG. 2 shows the XRD analysis data of the positive active material of Example 1, FIG. 3 shows the XRD analysis data of Example 2, and FIG. 4 shows the XRD analysis data of Comparative Example 1.

As shown in FIGS. 2 and 3, the materials of Examples 1 and 2 had a peak at a 2θ value of 40.0 to 41.0 degrees, while Comparative Example 1 had no peak at a 2θ value of the same degree range as shown in FIG. 4.

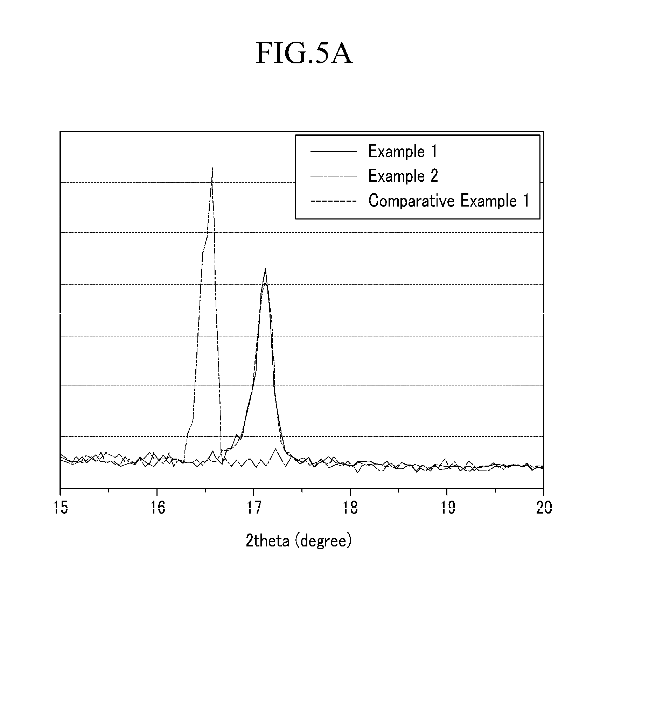

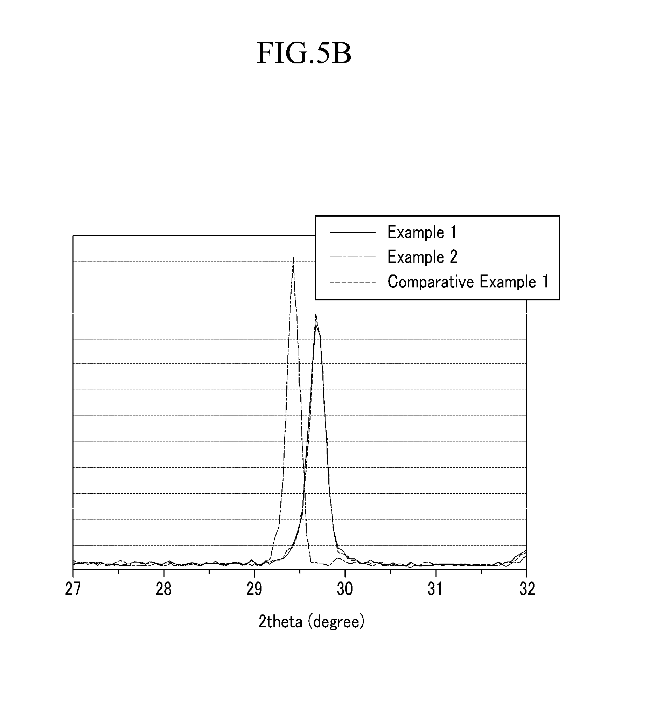

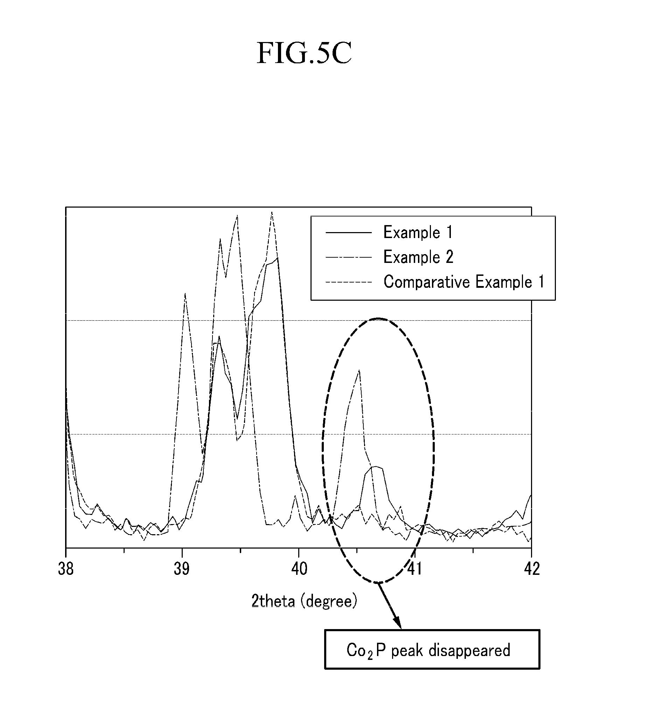

FIG. 5A, 5B, and 5C show XRD data of each a, b, and c axis direction extracted from the XRD analysis data in FIGS. 2 to 4. The XRD data show that the lattice parameter of an active material changed depending on a fire temperature. Herein, a (020) plane refers to a b axis (FIG. 5A), and a (200) plane refers to an a axis (FIG. 5B), and a (002) plane refers to a c axis (FIG. 5C). When the a, b, and c axes of a lattice parameter have a larger change, Li ions more easily move back and forth, improving ion conductivity. Referring to FIG. 5A, 5B, and 5C, when the firing temperature was increased, particles were larger toward the a and b axis directions. In addition, Comparative Example 1 had no CO₂P peak, when twice fired.

The resultant intensity ratios of XRD peaks at (002) and (020) planes of the XRD patterns of Example 1 and Example 2 from FIGS. 5C and 5A are shown in Table 1. The intensity ratio of XRD peaks at (002) and (020) planes of the XRD patterns can be calculated from the peak intensity values of each XRD peaks at (002) and (020) planes. The peak intensity values of XRD peaks at (002) and (020) planes can be obtained directly from the instrumentation(X-pert, philips). Otherwise, the intensity ratio of XRD peaks can be also obtained from the height ratio of the XRD peaks.

Additionally, electrical conductivity and ion conductivity of the positive active materials prepared in Example 1 and Example 2 were measured and the results are shown in Table 1.

**Table 1**

| | Intensity ratio of XRD peak at (002) and (020) planes of the XRD pattern | Electrical conductivity | Ion conductivity |
|---|---|---|---|
| Example 1 | 8:1 | 10⁻² S/m | 10⁻³ S/m |
| Example 2 | 15:1 | 10⁻²S/m | 10⁻² S/m |

### Battery cell characteristics

The coin cells were charged and discharged with a cut-off voltage ranging from 2.0V to 4.2V at a charge and discharge C-rate of 0.1C, 0.2C, 0.5C, 1C, 3C, 5C. All the charge and discharge experiments were performed in a room temperature chamber.

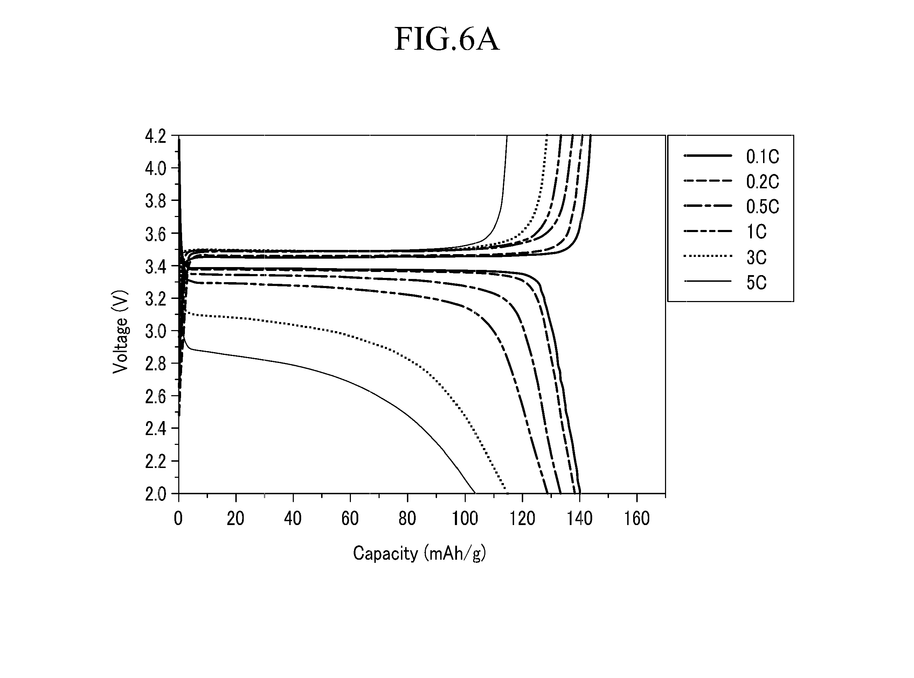

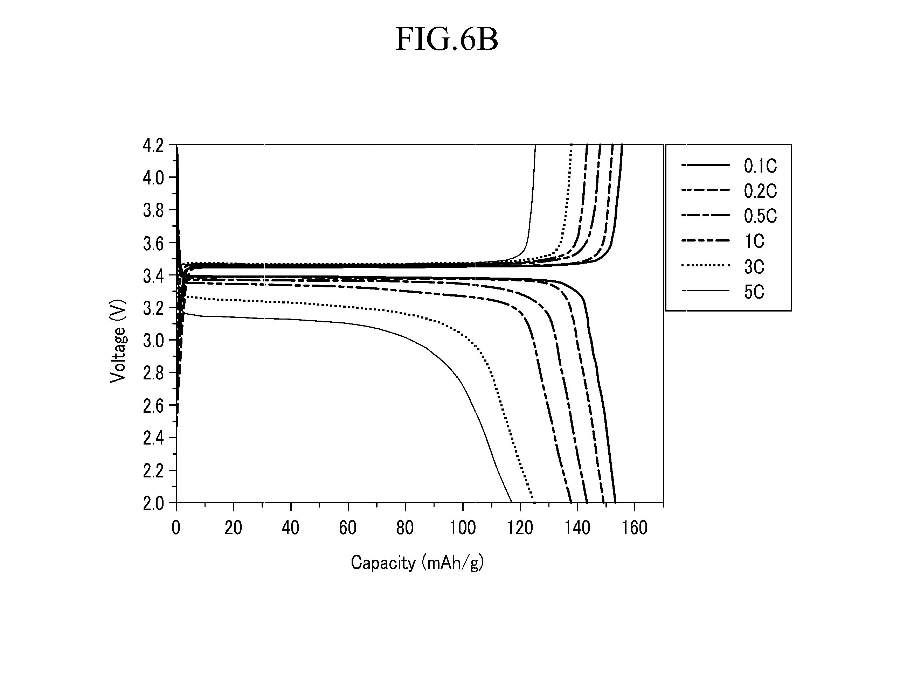

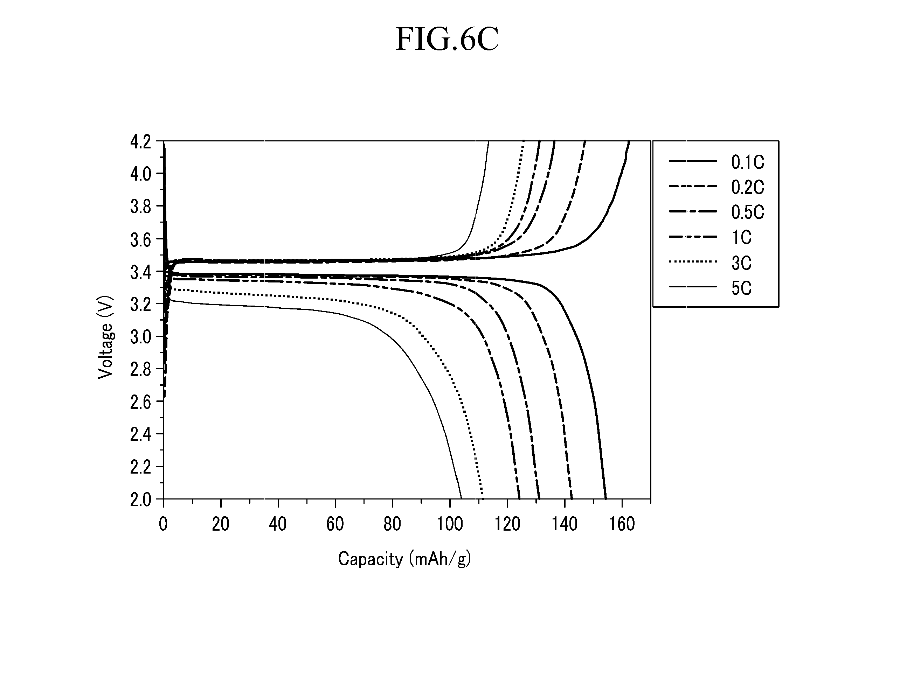

FIG. 6 shows charge and discharge data of the rechargeable lithium battery cells according to Examples 6 and 7 and Comparative Example 2.

Example 7 had a higher firing temperature than Example 6 and thus, a larger structure toward the a and b axis direction, in which Li ions can be more easily released. As a result, the coin cell of Example 7 had larger capacity at 0.1C. However, since a positive active material had a larger particle at a higher firing temperature and a longer path through which Li ions move back and forth, the coin cell of Example 7 had deteriorated high-rate efficiency characteristics at a higher C-rate compared with the coin cell of Example 6.

On the other hand, the coin cell fabricated through the two firing steps according to Comparative Example 2 had sharply deteriorated initial capacity, because CO₂P, which plays the role of a conductive layer on the surface, was decomposed and disappeared during the first firing step.

While the present invention has been described in connection with certain exemplary embodiments thereof, it is to be understood that the invention is not limited to the disclosed embodiments, but, on the contrary, is intended to cover various modifications and equivalent arrangements included within the scope of the appended claims.

## Claims

1. A positive active material for a rechargeable lithium battery comprising a compound of chemical formula 1:
LiₓM_{y}CO_{z}PO₄ (1)
in which
0≤X≤2, 0.98≤y≤1, 0<z≤0.02, and M is selected from the group consisting of V, Mn, Fe, Ni, and combinations thereof;
wherein the compound exhibits a peak at a 2θ value between 40.0° and 41.0° in an X-ray diffraction pattern measured using a CuKα-ray.

2. The positive active material of claim 1, wherein the compound of chemical formula 1 exhibits an XRD peak with an intensity ratio ranging from 20:1 to 8:1 at (002) and (020) planes in an X-ray diffraction pattern measured using a CuKα-ray.

3. The positive active material of claim 1 or claim 2, having a particle size ranging from 100 to 800 nm.

4. The positive active material of any preceding claim, wherein at least part of the surface of the compound of chemical formula 1 is coated with a carbon coating layer.

5. The positive active material of claim 4, wherein the carbon coating layer includes carbon selected from the group consisting of carbon nanotubes, carbon nanolobes, carbon nanowires, denka black, ketjen black, and combinations thereof.

6. A method of preparing a positive active material according to any of claims 1 to 5, the method comprising:
mixing a Li raw material, an M raw material, a PO₄ raw material, and a Co raw material; and
firing the mixture at a temperature ranging from 650 to 850°C.

7. The method of claim 6, wherein the mixture is fired for 8 to 12 hours.

8. The method of claim 6 or claim 7, wherein the firing is performed at a speed of about 2°C/min up to the firing temperature.

9. The method of any of claims 6 to 8, further comprising a cooling step after the mixture is fired.

10. The method of claim 9, wherein the cooling is performed at a speed of about 2°C/min.

11. The method of any of claims 6 to 10, further comprising adding a carbon raw material to the mixture before firing.

12. The method of claim 11, wherein the carbon raw material is selected from the group consisting of sucrose, glycol, glycerine, kerosene, and combinations thereof.

13. A rechargeable lithium battery comprising:
a positive electrode comprising a positive active material according to any of claims 1 to 5;
a negative electrode facing the positive electrode; and
a non-aqueous electrolyte.

14. Use of an active material comprising a compound of chemical formula 1:
LiₓM_{y}CO_{z}PO₄ (1)
in which 0≤x≤2, 0.98≤y≤1, 0 <z≤0.02, and M is selected from the group consisting of V, Mn, Fe, Ni, and combinations thereof;
wherein the compound exhibits a peak at a 2θ value between 40.0° and 41.0° in an X-ray diffraction pattern measured using a CuKα-ray; in a rechargeable lithium battery.
